# EUROPEAN PATENT SPECIFICATION

(11) **EP 0 802 288 B1**
(45) Date of publication and mention of the grant of the patent: **11.07.2001**
(21) Application number: 97106068.6
(22) Date of filing: 14.04.1997
(51) Int. Cl.: E05B 1/00, B60J 5/04, B60N 3/02

(54) **An integrated handle in the body, particularly the doors and/or the hatches, of a motor vehicle**
Ein im Fahrzeugaufbau, und insbesondere in einer Tür oder einer Klappe integrierter Handgriff
Poignée integrée dans la carosserie, et notamment dans une porte ou dans un hayon d'une vehicule automobile

(30) Priority: 16.04.1996 IT TO960293
(43) Date of publication of application: 22.10.1997
(73) Proprietor: FIAT AUTO S.p.A., 10135 Torino (IT)
(72) Inventor: Bodda, Eugenio, 14100 Asti (IT)
(74) Representative: Plebani, Rinaldo

(56) References cited:
- DE-C- 3 338 960

## Description

The present invention concerns a handle integrated in the body, particularly the doors and/or hatches, of motor vehicles, vans and similar vehicles; more particularly, the invention concerns a handle made from synthetic resin fitted in a seat in the body of the door, which is easy to use and symmetrical so that the same moulded component can be used for both left and right-handed use, and in vertical positions on sliding doors.

Document DE 3 338 960 C1 describes a handle integrated in the body of a vehicle as stated in the preamble of claim 1.

In currently available motor vehicles, many types of handles are used to operate the doors, which handles differ from each other not only in terms of their shape and aesthetic appearance, but also their functional characteristics; for example, one type is an arcuate handle which projects from the vehicle body, and which turns about a horizontal axis perpendicular to the side of the motor vehicle; another type is constituted by a lever fitted in a recess in the door, which turns outwardly in a horizontal or vertical plane, perpendicular to the door; a further type is simply a push button on the door or side of the motor vehicle close to a recess which enables the user's fingers to be introduced behind an adjacent edge of the door; among those described, some types of handles for doors and/or hatches are mainly concerned with aesthetic principles rather than satisfying functional and practical needs and therefore may not be easy to use; in addition, particularly if it is desired for aesthetic reasons that some of the handle be in the same colour as the vehicle body, the known handles must be made in a number of elements which are then assembled on the body, necessitating relatively long assembly times and high costs.

The object of the present invention is therefore to provide a handle for operating the doors and/or hatches of motor vehicles which will be free from the disadvantages described above, which will be simple and comfortable to use and easily adapted to different models of motor vehicles, which will be of such a shape as to be usable for both left and right doors and horizontally sliding doors, and which will be relatively easy, quick and economical to mount on the motor vehicle.

In accordance with this object, there is provided a handle integrated in the body of a motor vehicle, particularly in the doors and/or hatches of a motor vehicle, characterised in that the said handle includes a hollow, shell-shape casing provided with two handling apertures; and a seat blanked from the said body and drawn outwardly of the motor vehicle, the said seat having two cut apertures separated by a continuous strip of the body; the said shell-shape casing being introduced into the said seat from the side facing inwardly of the motor vehicle, with the handling apertures aligned with the said cut apertures in the seat; the said shell-shape casing also including a transverse element positioned between the handling apertures and coupled so as to be superimposed over the continuous strip, from the side facing inwardly of the motor vehicle, to form, with the said continuous strip, a grip element for the fingers of a user's hand introduced into the said apertures.

Further characteristics of the invention will become clearer from the following description of a preferred embodiment, given by way of non-limitative example, with reference to the accompanying drawings, in which:
Figure 1 is a perspective view of the handle according to the invention, mounted on a door;
Figure 2 is a front view of the handle of Figure 1;
Figure 3 is a section taken on the line III-III of Figure 2; and
Figure 4 is a section taken on the line IV-IV of Figure 2.

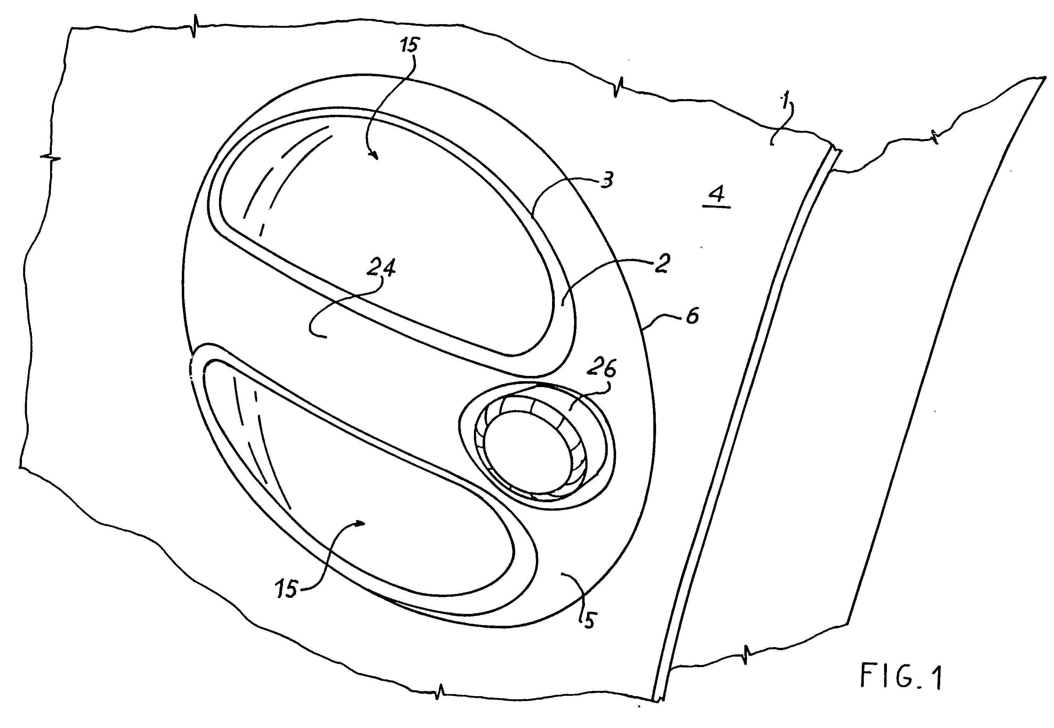

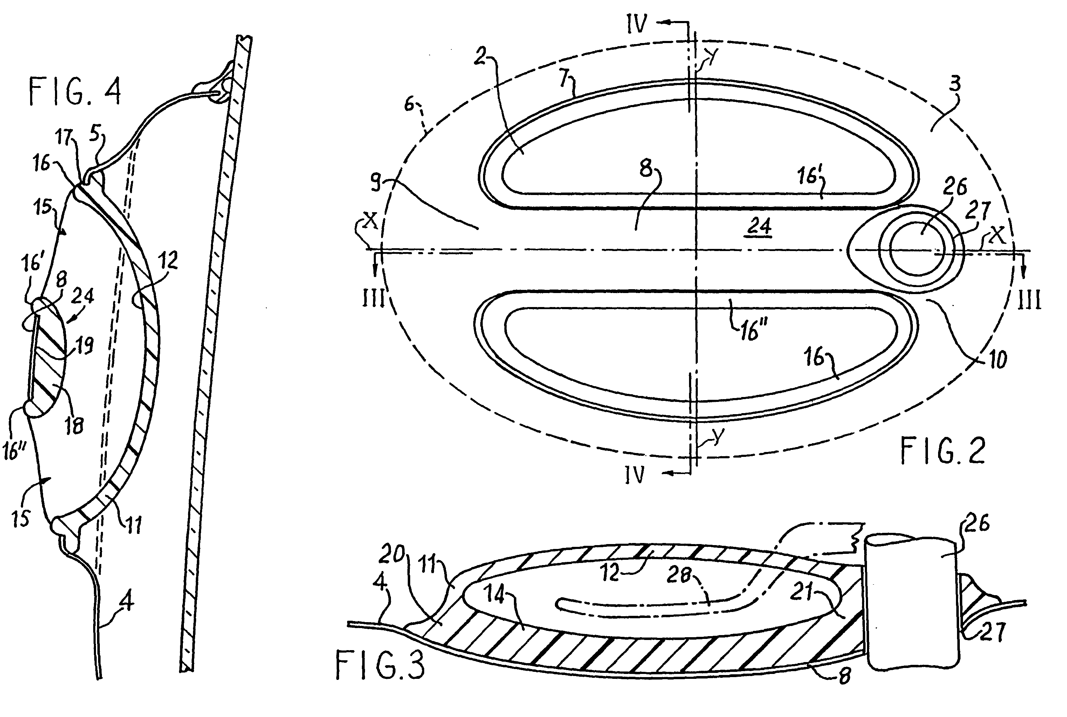

With reference to Figures 1 and 2, the reference numeral 1 indicates a door of a motor vehicle, equipped with a handle 2 according to the invention fitted in a seat 3 in the body 4, formed by an outward drawing 5 of the motor vehicle, delimited by a substantially elliptical outline 6 and having a horizontal major axis X-X and a vertical minor axis Y-Y; the depth of drawing is limited so as not to create a projection from the aerodynamic profile of the door 1 that is too pronounced, which would cause noise when moving.

At the same time as the drawing operation, the sheet metal of the seat 3 is cut to form two approximately ovoid apertures 7 which are symmetrical and separated by a continuous sheet metal strip 8 formed from that portion of the body 4 which is not cut when drawn to form the seat 3; the strip 8 joins two opposite sides 9 and 10 of the seat 3.

The handle 2 according to the invention includes the seat 3 and a hollow, approximately ellipsoid shell-shape casing 11 (Figures 3 and 4) formed from plastics material and including a closed rear wall 12 which joins to a front wall 14 provided with two handling apertures 15 the shapes and perimetral profiles of which are similar to and correspond with those of the apertures 7 of the seat 3; the apertures 15 are aligned with and face the apertures 7 and are bounded at their edges by a projecting protection bead 16 provided with a seat 17 which, during assembly, can be inserted with a slight force into the cut edge of the corresponding apertures 7 of the seat 3, working from the side of the body facing inwardly of the motor vehicle, to hold the shell 11 to the panel.

In use, the bead 16 projects out from the sheet metal of the body 4 of the motor vehicle and performs a double protective function: first, the bead 16 protects the user's finger when they grip the sharp corners of the continuous strip 8; secondly, it protects the paint on the door from being scratched or scored when the door is opened close to a vertical wall or the side of an adjacent motor vehicle.

The front wall 14 is therefore limited by a transverse portion 18 which is part of the shell 11 and which connects the two ends 20 and 21 of the shell 11, symmetrically separating the apertures 15; on mounting the shell 11 in the seat 3, the transverse portion 18 is positioned so as to be superimposed over the strip 8, from the inside of the motor vehicle, to form with the strip 8 a grip element 24 suitable to be gripped by the fingers of a user's hand; together with two facing portions 16' and 16'' (Figure 4), the bead 16 defines a seat 19 within which the continuous strip 8 is housed, which seat helps to hold the shell 11 in the correct position; the dimensions of the apertures 7 and 15 of the seat 3 and shell 11 respectively, are designed to provide comfortable access for four fingers, regardless of whether the left or right hand is used; similarly, the internal size of the shell 11 enables a user's fingers to be inserted and to bend around the transverse grip element 24.

At one end 10 of the transverse portion 18, in the zone where it joins with the panel around the body 4, a push button 26 is provided which is housed in a hole 27 and which can be pressed with the thumb for operating a lock or any opening/closure device, known and not shown, to unlock the door 1.

The hole 27 passes partly through the body 4 and partly through the shell-shape casing 11, in particular, through the continuous sheet metal strip 8 of the seat 3 and the transverse portion 18 of the shell 11.

By virtue of the symmetrical shape of the handle 2, the shell 11 can be produced in a single shape using a single mould, and can be used for all the handles of a motor vehicle; it may be mounted in either of two positions rotated by 180°, to operate the push button 26 with either the left or the right hand.

In addition, the handle 2 may be utilised in a position rotated through 90°, with the grip element 24 disposed vertically and the push button 26 consequently positioned above or below the grip element 24, for use on doors, particularly of vans, which are opened by sliding horizontally along a side of the vehicle.

In a possible embodiment, the push button 26 may be replaced by a lever 28 (shown in broken outline in Figure 3) disposed inside the shell-shape casing 11, behind the transverse portion 18 of this latter and the corresponding strip 8, and in such a position as to be easily manipulated with either the left or the right hand.

From what has been described, the advantages of the integrated handle according to the invention are clear; in fact, the limited projection of the handle 2 from the profile of the door 1 reduces drastically the formation of turbulence, even at high speeds, with a consequent reduction in noise, while it is extremely easy and quick to mount on the motor vehicle.

The absence of movable projecting handles to be gripped to operate the door eliminates the risk of scratching or scoring the paint around the handle; on the contrary, the integrated handle according to the invention, by forcing the user to insert fingers into the shell 11 to operate the door, means that the adjacent painted body is not touched. Therefore, from a stylistic point of view, the handle according to the invention, being obtained partly from a blanked and drawn portion of the body is, in use, painted the colour of the body and does not require parts to be painted separately from the rest of the body.

Finally, as already mentioned, the symmetrical shape of the handle enables a single model to be used for the shell 11, constructed from a single mould and usable for all of the handles of a motor vehicle, including the handle of a possible rear hatch, which may even therefore be orientated with the grip element 24 disposed vertically; in addition, the drawn and blanked seat 3 may be formed on all of the doors and/or hatches using a single die, with a significant saving in terms of equipment and production times.

## Claims

1. An handle integrated into the body of a vehicle, particularly into the doors and/or hatches of a motor vehicle, characterised in that the said handle (2) includes a hollow shell-shape casing (11) having two handling apertures (15); and a seat (3) formed in the said body (4), the said seat (3) being blanked and drawn outwardly of the motor vehicle and having two cut apertures (7) separated by a continuous strip (8) of body (4); the said shell-shape casing (11) being fitted in the said seat (3) from the side facing inwardly of the motor vehicle, the handling apertures (15) being aligned with the said cut apertures (7) of the seat; the said shell-shape casing (11) also including a transverse element (18) disposed between the handling apertures (15) and coupled so as to be superimposed on the said continuous strip (8) on the side facing inwardly of the motor vehicle to form, together with the said continuous strip (8), a grip element (24) for the fingers of a user's hand introduced into the said apertures (7; 15).

2. An integrated handle according to Claim 1, characterised in that it is provided with an opening member (26; 28) mounted on the said handle (2) for manually operating a device for opening/closing the door (1) .

3. An integrated handle according to Claim 2, characterised in that the said opening member (26) is a push button (26) projecting outwardly of the vehicle with respect to the said body (4), and positioned at an end of the said grip element (24) in a hole (27) which passes partly through the body (4) and partly through the said shell-shape casing (11).

4. An integrated handle according to Claim 3, characterised in that the said hole (27) passes through the said continuous strip (8) of body of the seat (3) and the said transverse element (18) of the shell (11).

5. An integrated handle according to Claim 2, characterised in that the said opening member (28) is a lever (28) disposed within the said shell-shape casing (11), behind the said transverse element (18).

6. An integrated handle according to any preceding claim, characterised in that the said shell-shape casing (11) is delimited by a continuous rear wall (12) and a front wall (14) connected to the said rear wall (12) and provided with the said handling apertures (15), the said handling apertures (15) being symmetrical and disposed on opposite sides of the said transverse element (18).

7. An integrated handle according to any preceding claim, characterised in that the said shell-shape casing (11) has a protective bead (16) disposed along an edge of the said handling apertures (15), projecting outwardly of the drawn seat (3) with respect to the said body (4) and having a seat (17) for housing an edge of the said cut apertures (7).

8. An integrated handle according to Claim 7, characterised in that the said transverse element (18) is provided with a depression (19) for housing the said continuous strip (8) of the body (4).

9. An integrated handle according to Claim 8, characterised in that the said depression is delimited by two portions (16';16'') facing the said protective bead (16).

## Patentansprüche

1. Handgriff, der in den Aufbau eines Fahrzeuges insbesonere in die Türen und/oder Klappen eines Kraftfahrzeuges integriert ist, dadurch gekennzeichnet, daß der Handgriff (2) ein hohles muschelförmiges Gehäuse (11) mit zwei Betätigungsöffnungen (15) und eine Aufnahme (3) aufweist, die im Aufbau (4) ausgebildet ist, welche Aufnahme (3) ausgestanzt und vom Kraftfahrzeug nach aussen gezogen ist und zwei geschnittene Öffnungen (7) aufweist, die durch einen durchgehenden Streifen (8) des Aufbaus (4) getrennt sind, wobei das muschelförmige Gehäuse (11) in die Aufnahme (3) von der Seite aus gepasst ist, die zum Inneren des Kraftfahrzeuges gewandt ist, die Betätigungsöffnungen (15) zu den geschnittenen Öffnungen (7) der Aufnahme ausgerichtet sind und das muschelförmige Gehäuse (11) ein querverlaufendes Element (18) aufweist, das zwischen den Betätigungsöffnungen (15) angeordnet und so angeschlossen ist, daß es über dem durchgehenden Streifen (8) auf der Seite liegt, die zum Inneren des Kraftfahrzeuges gewandt ist, so daß zusammen mit dem durchgehenden Streifen (8) ein Griffelement (24) für die Finger der Hand des Benutzers gebildet ist, die in die Öffnungen (7) und (15) eingeführt werden.

2. Integrierter Handgriff nach Anspruch 1, dadurch gekennzeichnet, daß er mit einem Öffnungselement (26), (28) versehen ist, das am Handgriff (2) angebracht ist, um von Hand eine Einrichtung zum Öffnen und Schließen der Tür (1) zu betätigen.

3. Integrierter Handgriff nach Anspruch 2, dadurch gekennzeichnet, daß das Öffnungselement (26) ein Druckknopf (26) ist, der vom Fahrzeug bezüglich des Aufbaus (4) nach außen vorsteht und an einem Ende des Griffelementes (24) in einem Loch (27) angeordnet ist, das teilweise durch den Aufbau (4) und teilweise durch das muschelförmige Gehäuse (11) geht.

4. Integrierter Handgriff nach Anspruch 3, dadurch gekennzeichnet, daß das Loch (27) durch den durchgehenden Streifen (8) des Aufbaus der Aufnahme (3) und durch das querverlaufende Element 18 des muschelförmigen Gehäuses (11) geht.

5. Integrierter Handgriff nach Anspruch 2, dadurch gekennzeichnet, daß das Öffnungselement (28) ein Hebel (28) ist, der im muschelförmigen Gehäuse (11) hinter dem querverlaufenden Element (18) angeordnet ist.

6. Integrierter Handgriff nach einem der vorhergehenden Ansprüche, dadurch gekennzeichnet, daß das muschelförmige Gehäuse (11) von einer durchgehenden Rückwand (12) und einer vorderen Wand (14) begrenzt ist, die mit der Rückwand (12) verbunden und mit den Betätigungsöffnungen (15) versehen ist, wobei die Betätigungsöffnungen (15) symmetrisch und auf den gegenüberliegenden Seiten des querverlaufenden Elementes (18) angeordnet sind.

7. Integrierter Handgiff nach einem der vorhergehenden Ansprüche, dadurch gekennzeichnet, daß das muschelförmige Gehäuse (11) einen Schutzrand (16) aufweist, der längs der Kante der Betätigungsöffnungen (15) angeordnet ist, von der gezogenen Aufnahme (3) bezüglich des Aufbaus (4) nach außen vorsteht und eine Aufnahme (17) zum Aufnehmen einer Kante der geschnittenen Öffnungen (7) aufweist.

8. Integrierter Handgriff nach Anspruch 7, dadurch gekennzeichnet, daß das querverlaufende Element (18) mit einer Vertiefung (19) zum Aufnehmen des durchgehenden Streifens (8) des Aufbaus (4) versehen ist.

9. Integrierter Handgriff nach Anspruch 8, dadurch gekennzeichnet, daß die Vertiefung von zwei Teilen (16'), (16'') begrenzt ist, die dem Schutzrand (16) zugewandt sind.

## Revendications

1. Poignée intégrée dans la carrosserie d'un véhicule, notamment dans les portières et/ou les ouvertures d'un véhicule automobile, caractérisée en ce que ladite poignée (2) inclut un boîtier en forme de coque (11) possédant deux ouvertures de manipulation (15); et un logement (3) formé dans ladite carrosserie (4), ledit logement (3) étant formé par découpage et emboutissage à l'extérieur du véhicule automobile et possédant deux ouvertures découpées (7) séparées par une bande continue (8) de la carrosserie (4); ledit boîtier en forme de coque (11) étant monté dans ledit logement (3) à partir du côté tourné vers l'intérieur du véhicule automobile, les ouvertures de manipulation (15) étant alignées avec lesdites ouvertures découpées (7) du logement; ledit boîtier en forme de coque (11) comprenant également un élément transversal (18) disposé entre les ouvertures de manipulation (15) et couplé de manière à être superposé à ladite bande continue (8) sur le côté tourné vers l'intérieur du véhicule automobile pour former, conjointement avec ladite bande continue (8), un élément de préhension (24) pour la main d'un utilisateur introduite dans lesdites ouvertures (7; 15).

2. Poignée intégrée selon la revendication 1, caractérisée en ce qu'elle est pourvue d'un organe d'ouverture (26;28) monté sur ladite poignée (2) pour actionner manuellement un dispositif pour l'ouverture/la fermeture de la portière (1).

3. Poignée intégrée selon la revendication 2, caractérisée en ce que ledit organe d'ouverture (26) est un bouton-poussoir (26) qui fait saillie à l'extérieur du véhicule par rapport à ladite carrosserie (4) et est positionné sous l'effet dudit organe de préhension (24) dans un trou (27) qui traverse partiellement la carrosserie (4) et partiellement ledit boîtier en forme de coque (11).

4. Poignée intégrée selon la revendication 3, caractérisée en ce que ledit trou (27) traverse ladite bande continue (8) du corps du logement (3) et ledit élément transversal (18) et la coque (11).

5. Poignée intégrée selon la revendication 2, caractérisée en ce que ledit organe d'ouverture (28) est un levier (28) disposé dans ledit boîtier en forme de coque (11), en arrière dudit élément transversal (18).

6. Poignée intégrée selon l'une quelconque des revendications précédentes, caractérisée en ce que ledit boîtier en forme de coque (11) est limité par une paroi arrière continue (12) et une paroi avant (14) raccordée à ladite paroi arrière (12) et comportant lesdites ouvertures de manipulation (15), lesdites ouvertures de manipulation (15) étant symétriques et disposées sur des côtés opposés dudit élément transversal (18).

7. Poignée intégrée selon l'une quelconque des revendications précédentes, caractérisée en ce que ledit boîtier en forme de coque (11) possède un rebord de protection (16) disposé le long d'un bord desdites ouvertures de manipulation (15) et faisant saillie à l'extérieur du logement embouti (3) par rapport à ladite carrosserie (4), et comportant un siège (17) servant à recevoir un bord desdites ouvertures découpées (7).

8. Poignée intégrée selon la revendication 7, caractérisé en ce que ledit élément transversal (18) comporte un renfoncement (19) destiné à loger ladite bande continue (8) de la carrosserie (4).

9. Poignée intégrée selon la revendication 8, caractérisé en ce que ledit renfoncement est délimité par deux parties (16',16") tournées vers ledit rebord de protection (16).
